# EUROPÄISCHE PATENTSCHRIFT

(11) **EP 1 106 428 B1**
(45) Veröffentlichungstag und Bekanntmachung des Hinweises auf die Patenterteilung: **23.04.2003**
(21) Anmeldenummer: 00123327.9
(22) Anmeldetag: 27.10.2000
(51) Int. Cl.: B60N 2/58, A47C 7/40

(54) **Einrichtung zum Abdecken eines Spaltes zwischen einer Rückenlehne und einem unteren Sitzteil eines Fahrzeugsitzes**
Device to cover a gap between a backrest and a lower cushion of a vehicle seat
Dispositif pour recouvrir une fente entre un dossier et une assise inférieure d'un siège de véhicule

(30) Priorität: 07.12.1999 DE 29921499 U
(43) Veröffentlichungstag der Anmeldung: 13.06.2001
(73) Patentinhaber: Johnson Controls GmbH, 51399 Burscheid (DE)
(72) Erfinder: Potisch, Robby, 51381 Leverkusen (DE); Lowinski, Clemens, 40724 Hilden (DE); Küttner, Jürgen, 51371 Leverkusen (DE)
(74) Vertreter: Kutzenberger, Helga, Dr.

(56) Entgegenhaltungen:
- EP-A- 0 634 303
- GB-A- 2 174 598
- US-A- 1 985 222
- US-A- 2 105 997
- US-A- 2 536 592
- US-A- 4 059 306
- US-A- 4 320 922

## Beschreibung

Die vorliegende Erfindung betrifft eine Einrichtung zum Abdecken eines Spaltes zwischen einer insbesondere neigungsverstellbaren Rückenlehne und einem unteren, insbesondere separat einstellbaren Sitzteil eines Fahrzeugsitzes, bestehend aus einem flächigen, flexiblen Abdeckelement, welches einerseits an dem Sitzteil und andererseits an der Rückenlehne zum Überbrücken des Spaltes befestigt und. dabei einseitig federelastisch aufgehängt ist.

Eine derartige Einrichtung ist aus der EP-A-0 634 303 bekannt. Diese Druckschrift beschreibt eine Verkleidung für die Rückenlehne eines Kfz-Sitzes, wobei ein formstabiles, die Polsterung der Rückenlehne rückseitig abdeckendes Formteil an seinem unteren Ende eine unter den Sitz nach vorne greifende Verlängerung aufweist. Diese Verlängerung besteht somit aus dem gleichen, eigentlich formstabilen Material, ist aber zur Anpaßbarkeit an die jeweilige Neigung der Rückenlehne dadurch flexibel ausgebildet, daß sie mit mehreren, im Wesentlichen parallel zu einer Schwenkachse der Rückenlehne verlaufenden Biegerillen versehen ist. Daraus resultiert eine recht aufwendige Fertigung. Die Verlängerung ist an ihrem unteren freien Ende über elastische Elemente, z. B. Federn oder Gummischnüre, an der Unterseite der Sitzkonstruktion angehängt, also nachteiligerweise in einem z.B. mit den Füßen erreichbaren und dadurch mechanisch und bezüglich Verschmutzung gefährdeten Bereich. Durch diese bekannte Einrichtung wird praktisch der gesamte hintere Bereich des Sitzes von dem Formteil und seiner Verlängerung abgedeckt. Die Gestaltung des hinteren Bereichs wird somit hauptsächlich von der Abdeckung bestimmt.

Der vorliegenden Erfindung liegt die Aufgabe zugrunde, eine Einrichtung der genannten Art zu schaffen, die bei wirtschaftlicher Herstellung und Montage verbesserte bzw. erweiterte Gestaltungsmöglichkeiten vor allem auch im rückwärtigen Bereich der Rückenlehne erlaubt.

Erfindungsgemäß wird dies dadurch erreicht, daß das Abdeckelement an dem Sitzteil im Wesentlichen starr, d. h. in Zugrichtung unelastisch, befestigt, durch eine schlitzförmige Durchführöffnung in die Rückenlehne hineingeführt sowie dort innerhalb der Rückenlehne über Zugfedermittel aufgehängt ist.

Durch die Erfindung ist vorteilhafterweise die Gestaltung der Rückenlehne auf ihrer Rückseite völlig unabhängig von dem Abdeckelement, da dieses ja innerhalb der Rückenlehne liegt und somit von außen gar nicht sichtbar ist. Die Rückenlehne kann dadurch auf ihrer Hinterseite beliebig gestaltet sein, beispielsweise aus einem üblichen Bezugsstoff (Textil, Leder oder dergleichen) und gegebenenfalls auch zusätzliche Ausstattungen, wie z. B. mindestens eine Aufnahmetasche für abzulegende Gegenstände, aufweisen. Die federelastische Aufhängung innerhalb der Rückenlehne hat gegenüber dem Stand der Technik, wobei ja die elastischen Elemente im unteren Bereich des Sitzes womöglich mit den Füßen berührt werden könnten, den wesentlichen Vorteil, daß die Zugfedermittel gut geschützt gegen Verschmutzungen, gegen mechanische Beschädigungen und/oder ungewolltes Lösen durch Berührungen untergebracht sind. Das Abdeckelement besteht dabei aus einem in sich flexiblen Material, insbesondere einem teppichartigen Textilmaterial, was auch zu einer wirtschaftlichen Herstellung führt. Gleichwohl kann auch eine mechanische Festigkeit erreicht werden, indem das teppichartige Material relativ fest und steif, aber dennoch flexibel ausgebildet ist. Die unelastische Befestigung im unteren Bereich des Sitzteils erfolgt zweckmäßigerweise über Hakenelemente, was ebenfalls für die Montage vorteilhaft ist.

Weitere vorteilhafte Ausgestaltungsmerkmale der Erfindung sind in den Unteransprüchen enthalten.

Anhand eines in der Zeichnung veranschaulichten, bevorzugten Ausführungsbeispiels soll die Erfindung genauer erläutert werden. Dabei zeigen:
- Fig. 1: eine Seitenansicht im Vertikalschnitt eines mit einer erfindungsgemäßen Einrichtung ausgestatteten Sitzes,
- Fig. 2: eine vergrößerte Darstellung des Bereichs II in Fig. 1, jedoch unter Weglassung des unteren Sitzteils,
- Fig. 3: eine vergrößerte Detaildarstellung der - in Fig. 1 nicht eingezeichneten - oberen Aufhängung des Abdeckelementes bzw. der Zugfedermittel und
- Fig. 4: eine schematische Draufsicht auf den oberen Bereich des Abdeckelementes mit Zugfedermitteln in Pfeilrichtung IV gemäß Fig. 3.

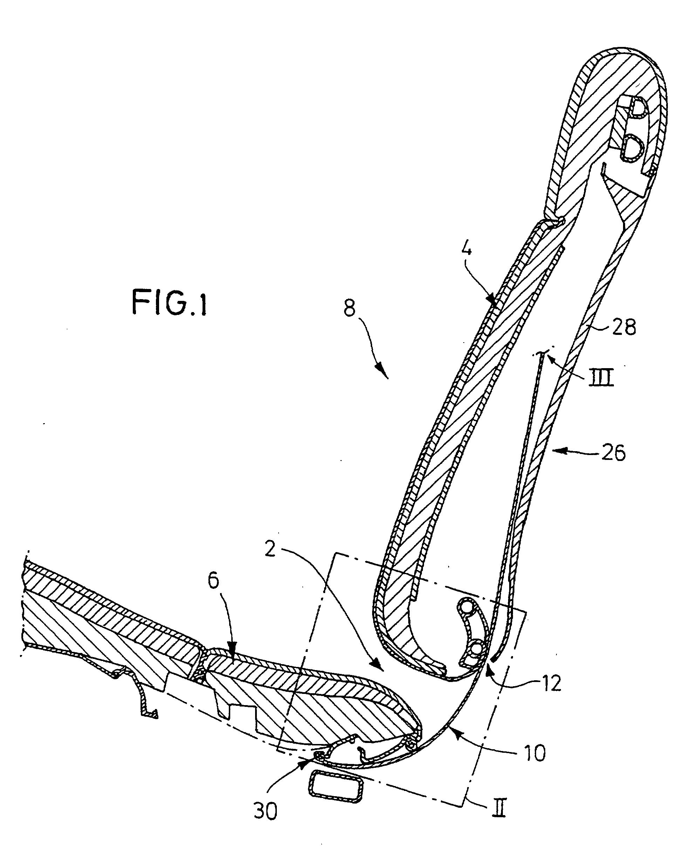

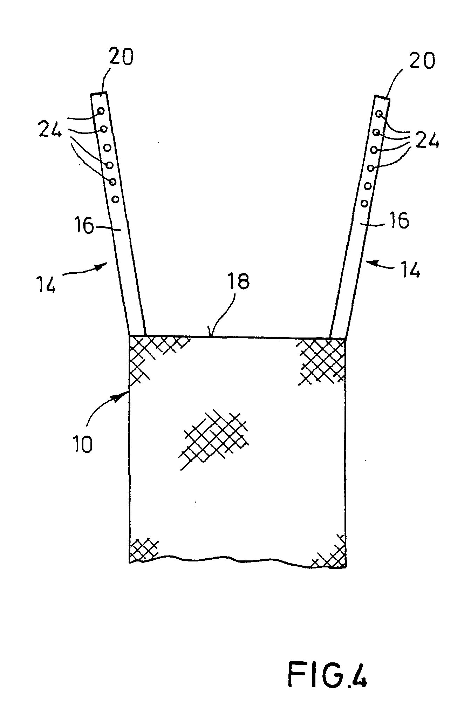

Wie sich zunächst aus Fig. 1 ergibt, dient eine erfindungsgemäße Einrichtung zum Abdecken eines Spaltes 2, der zwischen einer insbesondere neigungsverstellbaren Rückenlehne 4 und einem unteren, insbesondere separat einstellbaren Sitzteil 6 eines Fahrzeugsitzes 8 gebildet ist. Die Einrichtung besteht aus einem flächigen, flexiblen Abdeckelement 10 (vgl. auch Fig. 4), welches einerseits an dem Sitzteil 6 und andererseits an der Rückenlehne 4 zum im Wesentlichen verschließenden bzw. abdeckenden Überbrücken des Spaltes 2 befestigt und dabei einseitig federelastisch aufgehängt ist, um eine Anpassung an unterschiedliche Neigungen der Rückenlehne 4 zu gewährleisten.

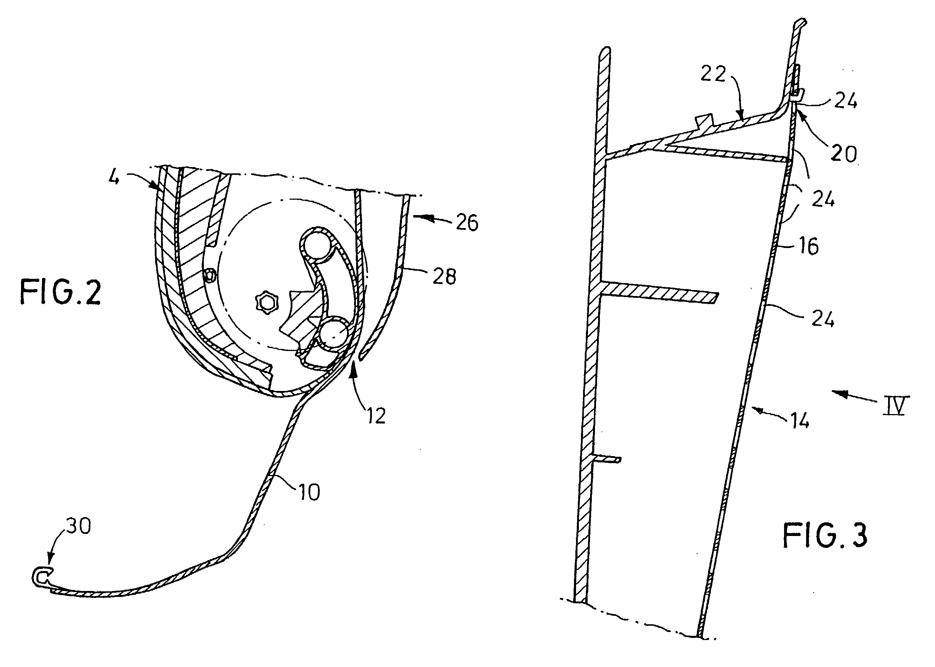

Erfindungsgemäß ist das Abdeckelement 10 im unteren, hinteren Bereich des Sitzteils 6 im Wesentlichen starr, d. h. in Zugrichtung unelastisch befestigt, von dort aus nach hinten und oben durch eine im unteren und hinteren Bereich der Rückenlehne angeordnete, schlitzförmige Durchführöffnung 12 in die Rückenlehne 4 hineingeführt sowie dort innerhalb der Rückenlehne 4 über Zugfedermittel 14 elastisch aufgehängt. Dazu wird auf Fig. 3 und 4 verwiesen, wonach die Zugfedermittel 14 durch (mindestens) zwei gummielastische, insbesondere band- oder schnurförmige Zugelemente 16 gebildet sind. Gemäß Fig. 4 sind die Zugelemente 16 in beiden Seitenbereichen des in die Rückenlehne 4 geführten, nach oben weisenden Randes 18 des Abdeckelementes 10 mit diesem verbunden und verlaufen vorzugsweise etwas schräg nach außen und oben. Jedes Zugelement 16 ist mit seinem freien, sich vom Abdeckelement 10 weg erstreckenden Ende 20 lösbar an einem starr in der Rückenlehne 4 angeordneten Halteteil 22 (nur in Fig. 3 dargestellt) angehängt. In dem bevorzugten Ausführungsbeispiel weist jedes Zugelement 16 mindestens eine Lochöffnung 24 auf, die auf das dazu hakenartig ausgebildete Halteteil 22 aufgehängt ist. Besonders vorteilhaft ist es, wenn jedes Zugelement 16 mehrere, in Längsrichtung verteilt angeordnete Lochöffnungen 24 aufweist, wobei zur Variation der Vorspannkraft wahlweise eine der Lochöffnungen 24 auf das Halteteil 22 aufhängbar ist.

Wie sich aus Fig. 1 und 2 ergibt, weist die Rückenlehne 4 auf ihrer von dem Sitzteil wegweisenden Rückseite 26 eine vorzugsweise lösbar befestigte Abdeckung 28 derart auf, daß durch Lösen der Abdeckung 28 eine Zugriffsöffnung zum Auf- bzw. Aushängen der Zugfedermittel 14 gebildet werden kann und bei befestigter Abdeckung 28 zwischen diesem und der übrigen Rückenlehne 4 die Durchführöffnung 12 für das Abdeckelement 10 gebildet ist. Die Abdeckung 28 bildet somit eine Art Deckel, dessen Rückseite die rückwärtige Oberfläche der Rückenlehne 4 bildet, Wobei die Rückfläche beliebig gestaltet werden kann.

An dem unteren Sitzteil 6 ist das Abdeckelement 10 im unteren Bereich einer Sitzschale (Sitzgestell) vorzugsweise über Hakenelemente 30 fest, d. h. unelastisch angehängt.

Bevorzugt ist vorgesehen, daß das Abdeckelement 10 aus einem textilen, teppichartigen Material besteht, beispielsweise aus einem unter dem Begriff "Dilour" bekannten Material.

Die Rückenlehne 4 bzw. die Abdeckung 28 kann auf der Rückseite 26 nicht dargestellte taschen- oder netzartige, vorzugsweise wenigstens teilweise an der Abdeckung 28 befestigte Ablagemittel aufweisen.

## Patentansprüche

1. Einrichtung zum Abdecken eines Spaltes (2) zwischen einer insbesondere neigungsverstellbaren Rückenlehne (4) und einem unteren, insbesondere separat einstellbaren Sitzteil (6) eines Fahrzeugsitzes (8), bestehend aus einem flächigen, flexiblen Abdeckelement (10), welches einerseits an dem Sitzteil (6) und andererseits an der Rückenlehne (4) zum Überbrücken des Spaltes (2) befestigt und dabei einseitig federelastisch aufgehängt ist,
**dadurch gekennzeichnet,**
**daß** das Abdeckelement (10) an dem Sitzteil (6) befestigt, durch eine schlitzförmige Durchführöffnung (12) in die Rückenlehne (4) hineingeführt sowie dort innerhalb der Rückenlehne (4) über Zugfedermittel (14) aufgehängt ist.

2. Einrichtung nach Anspruch 1,
**dadurch gekennzeichnet,**
**daß** die Zugfedermittel (14) durch mindestens zwei gummielastische, insbesondere band- oder schnurförmige Zugelemente (16) gebildet sind.

3. Einrichtung nach Anspruch 2,
**dadurch gekennzeichnet,**
**daß** die Zugelemente (16) in beiden Seitenbereichen des in die Rückenlehne (4) geführten, nach oben weisenden Randes (18) des Abdeckelementes (10) mit diesem verbunden sind.

4. Einrichtung nach Anspruch 2 oder 3,
**dadurch gekennzeichnet,**
**daß** jedes Zugelement (16) mit seinem freien, sich vom Abdeckelement (10) weg erstreckenden Ende (20) lösbar an einem starr innerhalb der Rückenlehne (4) angeordneten Halteteil (22) angehängt ist.

5. Einrichtung nach Anspruch 4,
**dadurch gekennzeichnet,**
**daß** jedes Zugelement (16) mindestens eine Lochöffnug (24) aufweist, die auf das dazu hakenartig ausgebildete Halteteil (22) aufgehängt ist.

6. Einrichtung nach Anspruch 5,
**dadurch gekennzeichnet,**
**daß** jedes Zugelement (16) mehrere, in Längsrichtung verteilt angeordnete Lochöffnungen (24) aufweist, wobei zur Variation der Vorspannkraft wahlweise eine der Lochöffnungen (24) auf das Halteteil (22) aufhängbar ist.

7. Einrichtung nach einem der Ansprüche 1 bis 6,
**dadurch gekennzeichnet,**
**daß** die Rückenlehne (4) auf ihrer von dem Sitzteil (6) wegweisenden Rückseite (26) eine insbesondere lösbar befestigte Abdeckung (28) derart aufweist, daß durch Lösen der Abdeckung (28) eine Zugriffsöffnung zum Auf- bzw. Aushängen der Zugfedermittel (14) gebildet werden kann und bei befestigter Abdeckung (28) zwischen dieser und der übrigen Rückenlehne (4) die Durchführöffnung (12) für das Abdeckelement (10) gebildet ist.

8. Einrichtung nach einem der Ansprüche 1 bis 7,
**dadurch gekennzeichnet,**
**daß** das Abdeckelement (10) an dem unteren Sitzteil (6) in dessen unterem Bereich einer Sitzschale über Hakenelemente (30) fest angehängt ist.

9. Einrichtung nach einem der Ansprüche 1 bis 8,
**dadurch gekennzeichnet,**
**daß** das Abdeckelement (10) aus einem textilen, insbesondere teppichartigen Material besteht.

10. Einrichtung nach einem der Ansprüche 1 bis 9,
**dadurch gekennzeichnet,**
**daß** die Rückenlehne (4) auf ihrer Rückseite (26) taschen- oder netzartige Ablagemittel aufweist.

## Claims

1. Device for covering a gap (2) between an, in particular, inclination-adjustable backrest (4) and a lower, in particular, separately adjustable seat part (6) of a vehicle seat (8), the device comprising a sheet-like, flexible covering element (10) which, in order to span the gap (2), is fastened on one side to the seat part (6) and on the other side to the backrest (4) and is suspended here resiliently on one side, **characterized in that** the covering element (10) is fastened to the seat part (6), is guided through a slot-shaped through-opening (12) into the backrest (4) and is suspended there within the backrest (4) via tension-spring means (14).

2. Device according to Claim 1, **characterized in that** the tension-spring means (14) are formed by at least two rubber-elastic tension elements (16), in particular in the form of a belt or cord.

3. Device according to Claim 2, **characterized in that** the tension elements (16) are connected to the covering element (10) in the two side regions of that edge (18) of the said covering element (10) which is guided into the backrest (4) and points upwards.

4. Device according to Claim 2 or 3, **characterized in that** each tension element (16) is attached at its free end (20), which extends away from the covering element (10), releasably to a retaining part (22) arranged rigidly within the backrest (4).

5. Device according to Claim 4, **characterized in that** each tension element (16) has at least one hole-type opening (24) which is suspended on the retaining part (22), which is of hook-like design for this purpose.

6. Device according to Claim 5, **characterized in that** each tension element (16) has a plurality of hole-type openings (24) which are distributed in the longitudinal direction, it being possible for one of the hole-type openings (24) to optionally be suspended on the retaining part (22) in order to vary the prestressing force.

7. Device according to one of Claims 1 to 6, **characterized in that** the backrest (4) has, on its rear side (26) facing away from the seat part (6), an, in particular, releasably fastened covering (28) in such a manner that release of the covering (28) enables an access opening to be formed for the suspension or unhooking of the tension-spring means (14) and, with the covering (28) fastened, the through-opening (12) for the covering element (10) is formed between the said covering and the rest of the backrest (4).

8. Device according to one of Claims 1 to 7, **characterized in that** the covering element (10) is attached fixedly to the lower seat part (6), in the lower region of the seat shell, via hook elements (30).

9. Device according to one of Claims 1 to 8, **characterized in that** the covering element (10) consists of a textile material, in particular carpet-like material.

10. Device according to one of Claims 1 to 9, **characterized in that** the backrest (4) has, on its rear side (26), pocket- or net-like storage means.

## Revendications

1. Dispositif pour recouvrir une fente (2) entre un dossier (4), en particulier inclinable, et une assise (6), en particulier réglable séparément, d'un siège de véhicule (8), se composant d'un élément de recouvrement (10) flexible et plat qui est fixé d'un part à l'assise (6) et d'autre part au dossier (4) en vue de recouvrir la fente (2) et qui est ainsi suspendu élastiquement d'un côté,
**caractérisé en ce que** l'élément de recouvrement (10) est fixé à l'assise (6), en étant inséré dans une ouverture de passage (12) en forme de fente ménagée dans le dossier (4) et accroché à l'intérieur du dossier (4) par un moyen (14) formant ressort de traction.

2. Dispositif selon la revendication 1, **caractérisé en ce que** le moyen (14) formant ressort de traction est formé par au moins deux éléments de traction (16) élastiques se présentant sous la forme de bandes ou de cordons.

3. Dispositif selon la revendication 2, **caractérisé en ce que** les éléments de traction (16) sont reliés à l'élément de recouvrement (10) dans deux zones latérales du bord (18), guidé dans le dossier (4) et dirigé vers le haut, dudit élément de recouvrement.

4. Dispositif selon la revendication 2 ou 3, **caractérisé en ce que** chaque élément de traction (16) est accroché, de façon amovible, par son extrémité (20) s'étendant depuis l'élément de recouvrement (10) à une pièce de retenue (22) agencée rigidement à l'intérieur du dossier (4).

5. Dispositif selon la revendication 4, **caractérisé en ce que** chaque élément de traction (16) comporte au moins une perforation (24) qui est accrochée à la pièce de retenue (22) alors conformée en crochet.

6. Dispositif selon la revendication 5, **caractérisé en ce que** chaque élément de traction (16) comporte plusieurs perforations (24) ménagées de façon répartie dans la direction longitudinale, l'une des perforations (24) pouvant être accrochée sélectivement à la pièce de retenue (22) en vue de faire varier la force de précontrainte.

7. Dispositif selon l'une des revendications 1 à 6, **caractérisé en ce que** le dossier (4) comporte, sur sa face arrière (26) opposée à l'assise (6), un revêtement (28) fixé en particulier de façon amovible de telle sorte qu'une ouverture d'accès puisse être ménagée en retirant le revêtement (28) en vue d'accrocher ou de décrocher le moyen (14) formant ressort de traction et, dans le cas où le revêtement (28) est fixé, l'ouverture de passage (12) destinée à l'élément de revêtement (10) est ménagé entre ledit revêtement (28) et le reste du dossier (4).

8. Dispositif selon l'une des revendications 1 à 7, **caractérisé en ce que** l'élément de revêtement (10) est accroché fixe à l'assise (6) dans la région inférieure d'une coque de siège via des éléments (30) formant crochets.

9. Dispositif selon l'une des revendications 1 à 8, **caractérisé en ce que** l'élément de revêtement (10) se compose d'un matériau textile, en particulier de type tapis.

10. Dispositif selon l'une des revendications 1 à 9, **caractérisé en ce que** le dossier (4) comporte au dos (26) des moyens de réception de type poche ou filet.
